**Europäisches Patentamt**

**European Patent Office**

**Office européen des brevets**

(11) Numéro de publication: **0 115 339**

**B1**

(12) **FASCICULE DE BREVET EUROPÉEN**

(45) Date de publication du fascicule du brevet:
13.01.88

(21) Numéro de dépôt: 84100614.7

(22) Date de dépôt: 26.01.84

(51) Int. Cl.⁴: **H 01 M 4/76**

(54) Enveloppe tubulaire pour électrode d'accumulateur.

(30) Priorité: 31.01.83 FR 8301443

(43) Date de publication de la demande:
08.08.84 Bulletin 84/32

(45) Mention de la délivrance du brevet:
13.01.88 Bulletin 88/2

(84) Etats contractants désignés:
AT BE CH DE FR GB IT LI LU NL SE

(56) Documents cité:
EP-A-0 077 846
WO-A-80/01626
DE-A-2 337 320
DE-A-2 626 160
FR-A-320 214
FR-A-1 127 372
FR-A-1 230 134
FR-A-2 254 887

(73) Titulaire: **COMPAGNIE EUROPEENNE D'ACCUMULATEURS Société anonyme dite:, 18, Quai de Clichy, F-92111 Clichy Cedex (FR)**

(72) Inventeur: **Rigal, Michel, 49 rue A. Renoir, F-78400 Chatou (FR)**
Inventeur: **Prudhomme, Guy, 29 Boulevard de la République, F-92210 Saint Cloud (FR)**

(74) Mandataire: **Weinmiller, Jürgen, Lennéstrasse 9 Postfach 24, D-8133 Feldafing (DE)**

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne les enveloppes tubulaires pour électrode d'accumulateur, notamment au plomb, constituées à partir de deux couches de tissu réunies entre elles le long de lignes parallèles de manière à former des tubes juxtaposés. De telles enveloppes sont par exemple connues à partir du document FR-A-1 230 134.

Ces enveloppes sont destinées à contenir la matière active des électrodes ainsi que des collecteurs de courant.

De telles enveloppes peuvent être réalisées, par exemple, à partir de plusieurs couches de tissu réunies entre elles, par couture ou thermosoudure, le long de lignes parallèles, formant ainsi lesdits tubes cylindriques juxtaposés.

Les tissus peuvent être à base de fibres de verre et/ou de fibres synthétiques, éventuellement recouvertés de résine afin d'assurer une bonne rigidité à l'enveloppe.

De manière à réaliser un accumulateur, les électrodes ainsi constituées, de forme générale plane, sont empilées les unes sur les autres avec interposition de séparateurs microporeux, pouvant être à base de polyéthylène, chlorure de polyvinyle, résines phénoliques, par exemple.

Dans le but de constituer des canaux entre les électrodes et lesdits séparateurs, ces derniers sont en général munis de nervures qui prennent appui sur les enveloppes.

Généralement ces nervures sont légèrement inclinées par rapport aux génératrices des tubes des enveloppes, ce qui fait que les contacts entre séparateurs et électrodes sont ponctuels.

On a pu constater par ailleurs, en particulier au niveau des électrodes positives, qu'au cours du vieillissement de l'accumulateur, une partie de la matière active s'échappait des enveloppes et pouvait ainsi créer des ponts provoquant des court-circuits. Pour remédier à cet inconvénient, il a été proposé de solidariser les extrémités des séparateurs de part et d'autre d'une électrode par collage, soudure. Toutefois cette opération entraine un coût supplémentaire prohibitif.

Aussi, a-t-on envisagé d'utiliser pour séparer les électrodes, (un élément d'accumulateur en contient généralement 12 à 14), un séparateur muni de nervures, replié en accordéon, par exemple à base de polyéthylène.

Cependant les fabrications actuelles en continu de séparateurs, dans lesquelles les nervures sont disposées sensiblement parallèlement à la longueur de la bande fabriquée se prêtent mal à une solution industrielle pour une telle disposition en accordéon.

En effet, pour assurer la mise en place correcte des nervures par rapport aux génératrices des tubes des enveloppes, il est nécessaire d'utiliser la bande, constituant le séparateur, dans le sens de sa largeur et non de sa longueur. Ces bandes présentant généralement une largeur de 1,5 à 2 m, l'accordéon formé ne peut concerner que 4 ou 5 électrodes alors que l'élément en contient 12 à 14.

Il a alors été proposé d'utiliser des séparateurs sans nervure, repliés en accordéon, mais associés à une feuille ondulée, le plus souvent perforée, à base de chlorure de polyvinyle, par exemple, que l'on replie également en accordéon.

Toutefois, une telle solution présente encore des inconvénients.

Ainsi, la séparation des électrodes exige-t-elle deux composants, (séparateur plan et feuille ondulée) ce qui augmente le prix de revient et crée des problèmes de manutention.

On connaît en outre par le document DE-A-23 37 320 une électrode d'accumulateur, composée d'une pluralité d'enveloppes tubulaires tissées, remplies de la matière active positive. Chaque enveloppe est munie de deux nervures d'espacement le long de deux génératrices opposées. Les nervures sont obtenues par un tissage particulier des enveloppes, tissage qui n'est pas applicable à la fabrication de tubes juxtaposés, mais seulement à la fabrication de tubes individuels.

La présente invention a pour but de remédier aux inconvénients précités en proposant une solution particulièrement simple et efficace, également économique et n'entraînant pas de difficultés de mise en place, au problème de la séparation d'électrodes comportant des enveloppes tubulaires, dans la constitution d'accumulateurs.

L'invention a pour objet une enveloppe tubulaire pour électrode d'accumulateur formée à partir de deux couches de tissu réunies entre elles le long de lignes parallèles de manière à former des tubes juxtaposés, caractérisée par le fait qu'entre deux lignes parallèles successives est intégré par tissage dans la structure de chacune desdites couches au moins un fil, ou faisceau de fils, constituant une nervure rectiligne formant espaceur.

Selon une caractéristique de l'invention le maintien du fil ou du faisceau de fils constituant ladite nervure est assuré au moyen de fils perpendiculaires présentant un espacement tel que ledit fil ou faisceau de fils reste saillant.

Le fil ou le faisceau de fils présente de préférence un diamètre moyen compris entre 0,3 et 2,1 mm, l'épaisseur des parois de l'enveloppe étant d'environ 0,3 mm.

Leur matériau est avantageusement choisi dans le groupe formé par le polyéthylène, le polypropylène, le chlorure de polyvinyle, les fibres de verre.

D'autres caractéristiques de l'invention ressortiront de la description qui va suivre et du dessin annexé dans lequel:

La figure 1 est une vue partielle en perspective, d'une enveloppe pour électrode d'accumulateur conforme à l'invention, ladite enveloppe comportant une pluralité de tubes juxtaposés.

La figure 2 est une coupe transversale selon la ligne II-II de la figure 1.

La figure 3 est une coupe transversale partielle et schématique d'un élément d'accumulateur dont les électrodes sont munies d'enveloppes conformes à l'invention.

La figure 4 est une coupe transversale d'une variante de l'enveloppe représentée à la figure 1.

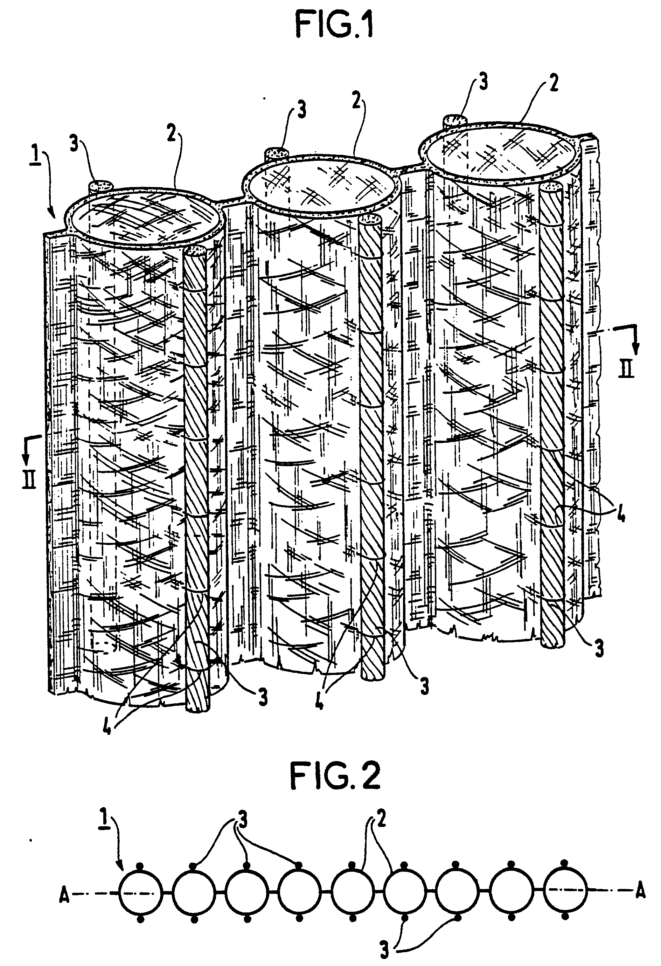

Sur les figures 1 et 2, la référence 1 désigne une enveloppe comportant une pluralité de tubes 2 cylindriques juxtaposés destinés à contenir la matière active des électrodes d'un accumulateur et notamment des électrodes positives.

D'une manière connue, l'enveloppe est constituée par une structure textile tissée. L'enveloppe 1 peut être réalisée à partir de plusieurs couches de tissu, fabriquées sur un métier à tisser selon les techniques usuelles, et réunies entre elles, par tissage, couture ou soudure, le long de lignes parallèles de manière à former les tubes 2.

Les tissus constitutifs de l'enveloppe 1 peuvent être réalisés au moyen de fibres de verre et/ou de fibres synthétiques résistant au milieu dans lequel elles sont utilisées.

Pour constituer des électrodes d'accumulateur au plomb, on peut ainsi utiliser des fibres à base de polyesters.

De manière à assurer une bonne rigidité à l'enveloppe, les fibres peuvent être recouvertes par une résine thermodurcissable.

Selon une variante, on peut également procéder à une imprégnation de l'enveloppe par une résine thermodurcissable après sa confection.

Conformément à l'invention, chacun des tubes 2 présente sur ses faces extérieures, suivant les génératrices les plus éloignées par rapport au plan de symétrie (ligne AA de la figure 2) de l'enveloppe 1 au moins un espaceur en forme de nervure rectiligne 3, constitué par un fil ou faisceau de fils intégré dans la structure tissée de l'enveloppe 1.

Le fil ou faisceau de fils constituant la nervure 3 peut de plus appartenir à la structure même de l'enveloppe et non être rapporté.

Autrement dit, ce fil peut être mis en place lors du tissage de ladite enveloppe 1, en substituant un fil de diamètre courant par un fil ou faisceau de fils de diamètre plus important.

On peut ainsi utiliser des fils ou faisceaux de fils présentant un diamètre compris entre 0,3 et 2,1 mm.

Ces fils ou faisceaux de fils 3 sont maintenus à l'aide de fils de diamètre courant perpendiculaire 4, en des points espacés, de manière à rester saillant par rapport à la surface de l'enveloppe. L'espacement entre deux fils 4 adjacents peut être compris entre 1 et 10 mm par exemple.

Les fils ou faisceaux de fils de diamètre plus important peuvent être constitués par tout matériau non dégradable dans le milieu où est utilisée l'enveloppe. Ils peuvent être constitués à base de polyéthylène, chlorure de polyvinyle, polypropylène. Ils peuvent également être constitués à base de fibres de verre.

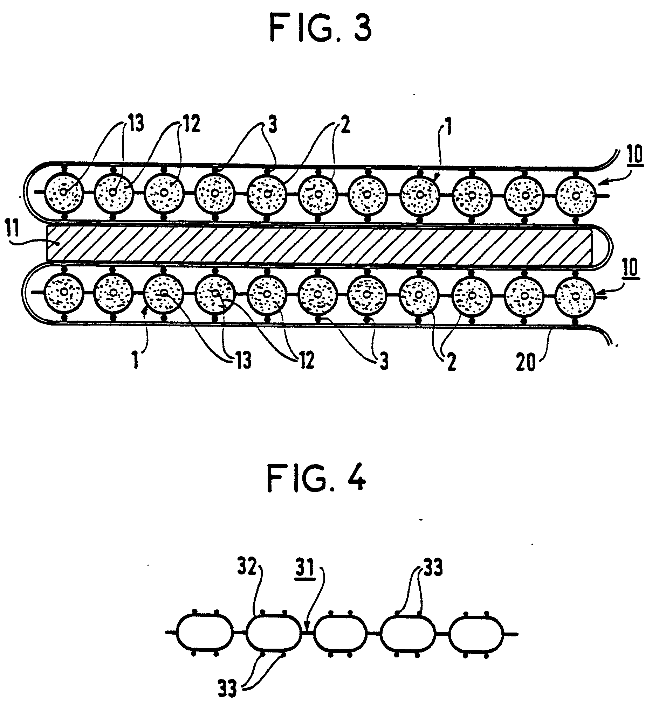

Sur la figure 3 on a représenté une coupe transversale partielle et schématique d'un élément d'accumulateur dont les électrodes positives 10 comportent des enveloppes 1, telles que représentées aux figures 1 et 2, munies de nervures rectilignes 3.

A l'intérieur des tubes 2 on dispose d'une part la matière active 12 et d'autre part une épine collectrice de courant 13.

La référence 11 désigne une électrode négative se présentant sous forme d'une plaque.

Entre les électrodes 10 et 11, on dispose un séparateur 20 replié en accordéon et sur lequel portent les nervures 3 des enveloppes 1 des électrodes positives 10.

Le séparateur 20, du fait de la présence des nervures 3, peut être constitué par une feuille dépourvue de nervures sur ses deux faces.

Eventuellement, il peut présenter une face sans nervure et l'autre avec quelques nervures, notamment celle destinée à être au contact de l'électrode négative 11.

La figure 4 est une coupe transversale d'une variante de l'enveloppe représentée à la figure 1.

L'enveloppe 31 diffère de l'enveloppe 1 en ce que la section des tubes juxtaposés 32 n'est plus circulaire mais plus ou moins ovale et que les faces extérieures de l'enveloppe, sensiblement planes, comportent chacune deux nervures rectilignes 33.

On donnera ci-après, à titre illustratif et nullement limitatif quelques exemples de dimensions.

Ainsi, pour les enveloppes telles que représentées sur les figures 1 et 2, lorsque le diamètre des tubes est de l'ordre de 9 mm, le diamètre des fils ou faisceaux de fils constituant les nervures rectilignes peut être voisin de 1,2 mm. Les électrodes réalisées à partir de ces enveloppes peuvent être utilisées avec un séparateur présentant une épaisseur moyenne d'environ 0,7 mm.

Lorsque le diamètre des tubes est voisin de 6 mm, le diamètre des fils ou faisceaux de fils peut être de l'ordre de 0,8 mm. Le séparateur utilisé avec les électrodes réalisées avec de telles enveloppes peut être le même que dans l'exemple précédent.

Pour les enveloppes telles que représentées sur la figure 4, lorsque la longueur des tubes est d'environ 13 mm et la distance entre les deux faces parallèles d'environ 5 mm, le diamètre des fils ou faisceaux de fils constituant les nervures rectilignes est d'environ 0,8 mm et les deux nervures sur une même face sont espacées d'environ 6 à 7 mm.

Le séparateur utilisé avec les électrodes réalisées avec de telles enveloppes peut être le même que dans l'exemple précédent.

Dans tous les cas, l'épaisseur moyenne de l'enveloppe tissée était de l'ordre de 0,3 mm.

Il est facile de constater que les contacts entre les enveloppes conformes à l'invention et les séparateurs, qui interviennent au niveau des nervures portées par les enveloppes se font le long de droites alors que selon l'art antérieur dans le cas des enveloppes comportant une pluralité de tubes juxtaposés, ces contacts n'étaient, le plus souvent, que ponctuels, les enveloppes étant dépourvues de nervures extérieures et les séparateurs munis de nervures légèrement obliques.

Il s'ensuit un renforcement du maintien mécanique des éléments électrochimiques réalisés à partir d'électrodes comportant des enveloppes conformes à l'invention.

Ces enveloppes permettent également d'abaisser le prix de revient des éléments électrochimiques, le prix des séparateurs sans nervures étant environ moitié de celui des séparateurs nervurés et la présence des nervures sur l'enveloppe n'entrainant pour celle-ci qu'un très faible surcoût.

## Revendications

1. Enveloppe tubulaire (1) pour électrode d'accumulateur formée à partir de deux couches de tissu réunies entre elles le long de lignes parallèles de manière à former des tubes juxtaposés, caractérisée par le fait qu'entre deux lignes parallèles successives est intégré par tissage dans la structure de chacune desdites couches au moins un fil ou faisceau de fils, constituant une nervure rectiligne (3, 33) formant espaceur.

2. Enveloppe selon la revendication 1, caractérisée par le fait que le maintien du fil ou faisceau de fils constituant la nervure (3, 33) est assuré au moyen de fils perpendiculaires (4) présentant un espacement tel que ledit fil ou faisceau de fils reste saillant.

3. Enveloppe selon l'une des revendications 1 et 2, caractérisée par le fait que le fil ou faisceau de fils constituant la nervure (3, 33) présente un diamètre moyen compris entre 0,3 et 2,1 mm, l'épaisseur des parois de l'enveloppe (1, 31) étant d'environ 0,3 mm.

4. Enveloppe selon l'une des revendications 1 à 3, caractérisée par le fait que le fil ou faisceau de fils constituant la nervure (3, 33) est réalisé à partir d'un matériau choisi dans le groupe formé par le polyéthylène, le polypropylène, le chlorure de polyvinyle, les fibres de verre.

5. Enveloppe selon l'une des revendications précédentes, caractérisée par le fait que les tubes (2) sont de section circulaire.

6. Enveloppe selon l'une des revendications 1 à 5, caractérisée par le fait que les tubes (32) sont de section sensiblement ovale.

## Patentansprüche

1. Röhrchenförmige Hülle (1) für eine Akkumulatorelektrode, wobei die Hülle aus zwei untereinander entlang paralleler Linien verbundenen Gewebeschichten besteht, die nebeneinanderliegende Röhrchen bilden, dadurch gekennzeichnet, daß zwischen zwei aufeinanderfolgende parallele Linien durch Weben in die Struktur jeder der Schichten mindestens ein Faden oder ein Fadenbündel integriert ist, das eine einen Abstandshalter bildende geradlinige Rippe (3, 33) bildet.

2. Hülle nach Anspruch 1, dadurch gekennzeichnet, daß der Halt des die Rippe (3, 33) bildenden Fadens oder des Fadenbündels mithilfe von senkrecht dazu liegenden Fäden (4) gesichert wird, die einen solchen Abstand zueinander aufweisen, daß der Faden oder das Fadenbündel vorspringend bleibt.

3. Hülle nach einem der Ansprüche 1 und 2, dadurch gekennzeichnet, daß der die Rippe (3, 33) bildenden Faden oder das Fadenbündel einen mittleren Durchmesser zwischen 0,3 und 2,1 mm aufweist, während die Wandstärke der Hülle (1, 31) etwa 0,3 mm beträgt.

4. Hülle nach einem der Ansprüche 1 bis 3, dadurch gekennzeichnet, daß der die Rippe (3, 33) bildende Faden oder das Fadenbündel aus einem Material hergestellt wird, das aus der Gruppe von Materialien bestehend aus Polyethylen, Polypropylen, Polyvinylchlorid und Glasfasern ausgewählt wird.

5. Hülle nach einem der vorhergehenden Ansprüche, dadurch gekennzeichnet, daß die Röhrchen (2) einen kreisförmigen Querschnitt aufweisen.

6. Hülle nach einem der Ansprüche 1 bis 5, dadurch gekennzeichnet, daß die Röhrchen (32) einen im wesentlichen ovalen Querschnitt aufweisen.

## Claims

1. A tubular envelope (1) for an accumulator electrode constituted by two cloth layers which are interconnected along parallel lines so as to form juxtaposed tubes, characterized in that at least one thread or bundle of threads constituting a rectilinear spacer-forming rib (3, 33) is woven into the structure of each of said layers.

2. An envelope according to claim 1, characterized in that the thread or bundle of threads constituting the rib (3, 33) is held by means of perpendicular threads (4) which are so spaced apart that the thread or bundle of threads remains outwardly projecting.

3. An envelope according to one of claims 1 and 2, characterized in that the thread or bundle of threads constituting the rib (3, 33) is preferably 0,3 to 2,1 mm in diameter, with the envelope (1, 31) walls being preferably about 0,3 mm thick.

4. An envelope according to one of claims 1 to 3, characterized in that the thread or bundle of threads constituting the rib (3, 33) is made of a material chosen from the group constituted by polyethylene, polypropylene, polyvinyl chloride and glass fibers.

5. An envelope according to any one of the preceding claims, characterized in that the tubes (2) have a circular cross section.

6. An envelope according to one of claims 1 to 5, characterized in that the tubes (32) are of substantially oblong cross section.

# FIG.1

# FIG.2

# FIG. 3

# FIG. 4